# EUROPÄISCHE PATENTSCHRIFT

(11) **EP 2 165 814 B1**
(45) Veröffentlichungstag und Bekanntmachung des Hinweises auf die Patenterteilung: **20.04.2016**
(21) Anmeldenummer: 10150143.5
(22) Anmeldetag: 26.05.2009
(51) Int. Cl.: B28B 7/38, C04B 26/02, C04B 26/22, C04B 41/45

(54) **BETONNACHBEHANDLUNGSMITTEL**
Concrete separator
Moyen de séparation de béton

(30) Priorität: 29.07.2008 DE 102008035236
(43) Veröffentlichungstag der Anmeldung: 24.03.2010
(62) Teilanmeldung aus: 09161128.5
(73) Patentinhaber: Dyckerhoff GmbH, 65203 Wiesbaden (DE)
(72) Erfinder: Droll, Klaus Dr., 55126, Mainz (DE)
(74) Vertreter: Solf, Alexander

(56) Entgegenhaltungen:
- WO-A1-2005/100459
- WO-A2-2006/030250
- DE-A1-102004 054 048
- US-A- 2 952 062
- US-A1- 2007 077 406
- VDZ Verein Deutscher Zementwerke: "Zement-Merkblatt Betontechnik: Nachbehandlung von Beton" 1. November 2002 (2002-11-01), XP002584931 Gefunden im Internet: URL:http://www.bdz-vdz.betonshop.de/files/ 209/2_1627_zm_b8_9_09.pdf> [gefunden am 2010-05-27]
- SACHTLEBEN CHEMIE: 'Hombikat UV 100' 03 September 2004, Seite 1, XP007922339
- SACHTLEBEN CHEMIE GMBH: 'HOMBIKAT UV100', [Online] 03 September 2004, Technisches Datenblatt Gefunden im Internet: <URL:http://kuroppe.tagen.tohoku.ac.jp/~dsc /0075e072.pdf> [gefunden am 2013-07-01]

## Beschreibung

Die Erfindung betrifft Betonnachbehandlungsmittel, die als Bauhilfsstoffe in der Betontechnologie verwendet werden. DIN 1045-3, Zement-Merkblatt, Betontechnik, B8, 11.2002, "Nachbehandlung von Beton" (www.BDZement.de), fordert die Nachbehandlung des Betons während der ersten Tage der Hydratation, um das Frühschwinden gering zu halten, eine ausreichende Festigkeit und Dauerhaftigkeit dr Betonrandzone sicherzustellen, das Gefrieren zu verhindern und schädliche Erschütterungen, Stoß oder Beschädigung zu vermeiden. Dazu dienen die Betonnachbehandlungsmittel.

Gemäß Merkblatt werden Nachbehandlungsfilme (Curingmittel) auf Betonoberflächen in vorgeschriebenen Mengen aufgesprüht. Sie sollen nach Funktionserfüllung gegebenenfalls wieder entfernt werden, wenn nicht nachgewiesen ist, dass nachteilige Auswirkungen auf nachfolgende Arbeiten ausgeschlossen sind. Das trifft z.B. auf wachshaltige Nachbehandlungsfilme oder Kombinationsprodukte auf Basis von PVC-Mischpolymerisaten, Epoxidharzlösungen mit feuchtigkeitsempfindlichen Lösungsmitteln zu .

US2952062A1 zeigt Entschalungshilfsmittel auf Wachsbasis enthaltend lichtreflektierende Pigmente.

Aufgabe der Erfindung ist Betonnachbehandlungsmittel zu schaffen, die während der Einsatzphase wirken und sich nach dem Wirken zersetzen, so dass keine die Oberfläche beeinträchtigenden Rückstände auf der Betonoberfläche verbleiben.

Diese Aufgabe wird durch die Merkmale des Anspruchs 1 gelöst. Vorteilhafte Weiterbildungen der Erfindung werden in den Unteransprüchen gekennzeichnet.

Die Erfindung betrifft die Beschichtung von Betonoberflächen zum Zwecke der Nachbehandlung, wobei zur Beschichtung eine Trägersubstanz verwendet wird, die auf organische Moleküle von Nachbehandlungsmitteln photokatalytisch wirkende Nanopartikel von zum Beispiel TiO₂ und/oder ZnO oder anderen bekannten photokatalytisch wirkenden Nanopartikeln, insbesondere auch mineralmodifizierten Nanopartikeln mit jeweils einem breiteren Absorptionspektrum (z.B. DE 10 2005 057 770 A1, DE 10 2005 057 747 A1, WO 01/00541 A1) aufweist. Die Trägersubstanz wird aufgrund der von den Nanopartikel bei Beaufschlagung mit UV-Strahlung und/oder sichtbarem Licht ausgelösten Photokatalyse im Wesentlichen oder vollkommen rückstandsfrei zersetzt, wobei die photokatalytischen Nanopartikel auf der Oberfläche des Betons beziehungsweise im Oberflächenbereich dauerhaft zurückgelassen werden. Beispiele für solche Trägersubstanzen sind zum Beispiel: Wachsemulsionen, Polymerdispersionen, filmbildende Betonnachbehandlungsmittel (Curingmittel).

Die Teilchen- beziehungsweise Partikelgrößen liegen zweckmäßigerweise zwischen 5 und 500 nm, insbesondere 20 und 100 nm. Die Nanoteilchen haben die Eigenschaft, unter Bestrahlung durch zum Beispiel Tageslicht eine Photokatalyse zu initiieren, bei der in der Nähe dieser Nanoteilchen befindliche organische Moleküle oxidieren und CO₂ bilden. Demgemäß werden die organischen Stoffe der Trägersubstanz bei Umgebungstemperatur oxidiert und flüchtige Reaktionsstoffe gebildet. Die Trägersubstanz wird somit entfernt von der Betonoberfläche.

Die Oxidation der Nachbehandlungsmittelbestandteile hinterlässt in überraschender Weise in ausreichender Menge Nanoteilchen auf der Betonoberfläche und/oder im Oberflächenbereich dauerhaft haftend. Die Nanopartikel setzen sich vornehmlich in Vertiefungen, im Kapillarsystem und Poren der Betonoberfläche fest.

Diese anhaftenden Nanopartikel bewirken synergistisch durch photokatalytische Aktivität die an sich bekannte Reinigung der sie umgebenden Luft, die Stickoxyde wie NOₓ oder NO und SO₂ aufweist.

Bekannt ist die Anordnung von Metalloxydfilmbeschichtungen auf Licht ausgesetzten Baukörpern, insbesondere auch auf Betonbaukörpern (EP 590 477 A1). Verwendet werden zum Beispiel als Metalloxyde Titandioxyd, Eisenoxyd, Silberoxyd, Kupferoxyd, Wolframoxyd, Aluminiumoxyd, Siliziumoxyd, Zinkoxyd sowie Strontiumtitanat. Die Filmbeschichtung soll dauerhaft sein, weshalb die Beschichtung wärmebehandelt wird, so dass dann der Film nicht bricht oder abschält (DE 693 11 866 T2). Bekannt ist in diesem Zusammenhang auch, den Filmen, die die Nanopartikel mit den photokatalytischen Eigenschaften aufweisen, zur Verstärkung der photokatalytischen Wirkung der Nanopartikel ein zweites Metall zuzugeben.

Die Erfindung befasst sich somit im Wesentlichen mit der Modifizierung von Betonoberflächen durch speziell ausgerüstete Nachbehandlungsmittel, die neben ihrer Nachbehandlungswirkung zusätzlich eine Oberflächenmodifizierung des Betons herbeiführen, dahingehend, dass die Nanopigmente in die Betonoberfläche eingebaut werden und bei Bestrahlung mit Tageslicht beziehungsweise UV-Licht photokatalytisch wirken.

## Patentansprüche

1. Betonnachbehandlungsmittel geeignet zur Nachbehandlung des Betons während der ersten Tage der Hydratation, aufweisend als organische Trägersubstanz ein Betonnachbehandlungsmittel in Form einer Wachsemulsion, Polymerdispersion oder eines filmbildenden Betonnachbehandlungsmittels enthaltend auf organische Moleküle des Betonnachbehandlungsmittels photokatalytisch wirkende Nanopartikel mit Partikelgrößen zwischen 5 und 500 Nanometern, insbesondere auch mineralmodifizierte photokatalytisch wirkende Nanopartikel mit breiteren auch im sichtbaren Licht wirkenden Absorptionspektren, in einer Menge, die bewirkt, dass durch UV-Strahlung, insbesondere durch Tageslichteinwirkung, die organischen Bestandteile des Betonnachbehandlungsmittels photokatalytisch abgebaut und dabei durch Bildung flüchtiger Reaktionsstoffe von der Betonoberfläche entfernt werden, wobei die Nanopartikel auf der Betonoberfläche verbleiben.

2. Betonnachbehandlungsmittel nach Anspruch 1,
**dadurch gekennzeichnet,**
**dass** die Nanopartikel TiO₂- und/oder ZnO-Partikel sind.

3. Betonnachbehandlungsmittel nach Anspruch 1 und/oder 2,
**dadurch gekennzeichnet,**
**dass** die Nanopartikel bei Größen zwischen 5 und 500 Nanometer, insbesondere zwischen 20 und 100 Nanometer liegen.

4. Betonnachbehandlungsmittel nach einem oder mehreren der Ansprüche 1 bis 3,
**dadurch gekennzeichnet,**
**dass** das Nachbehandlungsmittel die Nanopartikel in Pulverform und/oder als Sol/Gel-Formulierung und/oder in Form einer Nanopartikeldispersion beigemengt enthält.

5. Betonnachbehandlungsmittel nach einem oder mehreren der Ansprüche 1 bis 4,
**dadurch gekennzeichnet,**
**dass** es eine 30 bis 50%ige wässrige Nanopartikel-Suspension enthält.

## Claims

1. Concrete curing compound suitable for curing the concrete during the first days of hydration, comprising as organic carrier substance a concrete curing compound in the form of a wax emulsion, polymer dispersion or a film-forming concrete curing compound containing nanoparticles acting photocatalytically on organic molecules of the concrete curing compound and having particle sizes of between 5 and 500 nanometres, in particular also mineral-modified photocatalytically acting nanoparticles having broader absorption spectra also acting in visible light, in an amount which causes the organic components of the concrete curing compound to photocatalytically decompose due to UV radiation, in particular due to the effect of daylight, and thereby be removed from the concrete surface due to formation of volatile reaction substances, the nanoparticles remaining on the concrete surface.

2. Concrete curing compound according to claim 1,
**characterised in that**
the nanoparticles are TiO₂ particles and/or ZnO particles.

3. Concrete curing compound according to claim 1 and/or 2,
**characterised in that**
the nanoparticles have sizes between 5 and 500 nanometres, in particular between 20 and 100 nanometres.

4. Concrete curing compound according to one or more of claims 1 to 3, **characterised in that**
the curing compound contains the nanoparticles admixed in powder form and/or as a sol/gel formulation and/or in the form of a nanoparticle dispersion.

5. Concrete curing compound according to one or more of claims 1 to 4, **characterised in that**
it contains a 30 to 50% aqueous nanoparticle suspension.

## Revendications

1. Agent de post-traitement de béton convenant au post-traitement du béton au cours des premiers jours de l'hydratation, présentant en tant que support organique un agent de post-traitement de béton se présentant sous la forme d'une émulsion de cire, d'une dispersion polymère ou d'un agent de post-traitement filmogène contenant des nanoparticules agissant par photocatalyse sur des molécules organiques de l'agent de post-traitement de béton, présentant une granulométrie comprise entre 5 et 500 nanomètres, en particulier également des nanoparticules agissant par photocatalyse, minéralement modifiées à spectres d'absorption plus larges agissant également dans la lumière visible, en une quantité qui a pour effet que les composants organiques de l'agent de post-traitement de béton sont décomposés par photocatalyse et sont éliminés ce faisant par la formation de substances réactionnelles volatiles sous l'action d'un rayonnement UV, en particulier sous l'effet de la lumière du jour, dans lequel les nanoparticules restent sur la surface du béton.

2. Agent de post-traitement de béton selon la revendication 1,
**caractérisé en ce que**
les nanoparticules sont des particules de TiO₂ et/ou de ZnO.

3. Agent de post-traitement de béton selon la revendication 1 et/ou 2,
**caractérisé en ce que**
les tailles des nanoparticules se situent entre 5 et 500 nanomètres, en particulier entre 20 et 100 nanomètres.

4. Agent de post-traitement de béton selon l'une quelconque ou plusieurs des revendications 1 à 3,
**caractérisé en ce que**
l'agent de post-traitement contient de manière incorporée les nanoparticules sous forme de poudre et/ou sous la forme d'une formulation sol/gel et/ou sous la forme d'une dispersion de nanoparticules.

5. Agent de post-traitement de béton selon l'une quelconque ou plusieurs des revendications 1 à 4,
**caractérisé en ce que**
il contient une suspension de nanoparticules aqueuse à 30 à 50 %.
